Europäisches Patentamt

European Patent Office

Office européen des brevets

(19)

(11) Veröffentlichungsnummer: **0 021 466**
**B1**

(12)

# EUROPÄISCHE PATENTSCHRIFT

(45) Veröffentlichungstag der Patentschrift:
**30.11.83**

(21) Anmeldenummer: **80200443.2**

(22) Anmeldetag: **13.05.80**

(51) Int. Cl.³: **C 08 J 5/18,** C 09 J 7/02,
G 11 B 5/70, B 65 D 65/38

(54) **Polypropylenfolie und deren Verwendung.**

(30) Priorität: **21.05.79 DE 2920514**

(43) Veröffentlichungstag der Anmeldung:
**07.01.81 Patentblatt 81/1**

(45) Bekanntmachung des Hinweises auf die Patenterteilung:
**30.11.83 Patentblatt 83/48**

(84) Benannte Vertragsstaaten:
**AT BE CH DE FR GB IT LI LU NL SE**

(56) Entgegenhaltungen:
**DE - A - 1 504 523**
**FR - A - 1 356 009**
**FR - A - 2 242 450**
**GB - A - 1 030 953**

(73) Patentinhaber: **UNILEVER NV, Burgemeester
s'Jacobplein 1 P.O. Box 760, NL-3000 DK Rotterdam (NL)**

(84) Benannte Vertragsstaaten: **BE CH DE FR IT LI LU NL SE
AT**

(73) Patentinhaber: **UNILEVER PLC, Unilever House
Blackfriars P O Box 68, London EC4P 4BQ (GB)**

(84) Benannte Vertragsstaaten: **GB**

(72) Erfinder: **Hufnagel, Walter, Am Liebessteig 17a,
D-8550 Forchheim (DE)**
Erfinder: **Vates, Heinz, Schlesierstrasse 14,
D-8510 Fürth-Stadeln (DE)**

(74) Vertreter: **Hartong, Richard Leroy et al, Unilever N.V.
Patent Division P.O. Box 137, NL-3130 AC Vlaardingen
(NL)**

## Polypropylenfolie und deren Verwendung

Die Erfindung betrifft eine simultan biaxial gereckte Polypropylenfolie, die nach ihrer Herstellung während ihrer weiteren Verarbeitung und/oder im Gebrauch dynamischen Belastungen, insbesondere Zugbelastungen in der Maschinenlaufrichtung bei ihrer Herstellung ausgesetzt wird. Die Erfindung bezieht sich insbesondere auf Trägerfolien.

Als dynamische Belastungen sind im folgenden kurzzeitige Zugbelastungen zu verstehen, bei denen eine Folie meist mehrfach auf Dehnung beansprucht wird, ohne daß die Reißfestigkeit überschritten wird bzw. die Dehnung zum Bruch führt. Die dynamischen Belastungen können bei einer Folie auftreten, wenn sie beispielsweise umgerollt, beschichtet, bedruckt oder in einer Verpackungsmaschine verarbeitet wird. Andere dynamische Belastungen mit anschließender Entlastung kommen bei Aufzeichnungsträgern vor, die häufig ruckartig beschleunigt und angehalten werden. Die dynamischen Belastungen können bei Raumtemperatur oder bei erhöhten Temperaturen auftreten.

Bekannte Daten zur Kennzeichnung der mechanischen Eigenschaften von Folien wie z. B. die Reißfestigkeit geben keinen befriedigenden Hinweis auf zulässige dynamische Belastungen und auf zu beachtende Dehnungen, die bei der Verarbeitung und beim Gebrauch der Folien zu erwarten sind.

Die Verformung von kristallinen Kunststoffen infolge von Belastungen hängt sehr von dem Kristallgefüge ab. Für die hier genannten Polypropylenfolien wird isotaktisches Polypropylen verwendet.

Die Folie wird während ihrer Herstellung als flache Folie simultan biaxial gereckt und dabei orientiert. Durch die Reckung soll die Folie ausgereckt werden, d. h. die Reckung wird bei einer die Orientierung ermöglichenden Temperatur bis etwa zu dem praktisch erreichbaren maximalen Reckgrad durchgeführt. Eine ausgereckte Polypropylenfolie hat einen Reckgrad von mindestens 1 : 45, d. h. die Fläche der zuerst extrudierten Folie wird durch die Reckung auf das 45fache vergrößert. Durch das Ausrecken wird auch eine gleichmäßige Dicke der Folie erhalten. Bei Polypropylenfolien soll theoretisch ein Reckgrad von etwa 1 : 49 erreichbar sein, in der Praxis ergeben sich jedoch hiervon Abweichungen, und es sind auch Reckgrade über 1 : 50 möglich. Bei einer balancierten biaxialen Reckung ist die Polypropylenfolie in Längs- und Querrichtung jeweils im Verhältnis etwa 1 : 7 gereckt und besitzt in diesen beiden Richtungen dieselben mechanischen Eigenschaften. Die hier gemeinten Polypropylenfolien sind balanciert ausgereckt oder sind so ausgereckt, daß der Reckgrad in Längsrichtung gegenüber dem Reckgrad quer überwiegt. Als Längsrichtung der Folie ist die Maschinenlaufrichtung bei der Herstellung anzusehen, die üblicherweise auch die Laufrichtung bei der Weiterverarbeitung und beim Gebrauch ist.

Polypropylenfolien gelten im Bereich geringer Belastungen und bei Dehnungen bis 5% als elastisch, wobei angenommen wird, daß eine Dehnung bis 5% bei Entlastung vollständig reversibel ist. Diese Betrachtungsweise ist jedoch ungenau, da auch eine ausgereckte Polypropylenfolie noch ein viskoelastischer Stoff ist, bei dem auch kleinere Verformungen neben einem elastischen, reversiblen Anteil einen irreversiblen Anteil erzeugen. Dies kann beispielsweise dazu führen, daß in einer Mehrfarbendruckmaschine mit zwischengeschalteten, beheizten Trocknungszonen sich die Druckbilder der einzelnen Farben infolge der mehrfach auftretenden dynamischen Zugbelastungen verschieden und die genaue Länge der einzelnen bedruckten Abschnitte auf der Bahn nur schwer beherrschbar ist. Die Längung der Bahn kann allerdings empirisch dadurch verringert werden, daß eine dickere Folie gewählt wird, die jedoch nicht nur wegen des größeren Rohmaterialverbrauchs für eine bestimmte Folienlänge teurer ist, sondern auch weitere Nachteile besitzen kann, wie z. B. weniger Windungen auf einer Rolle bestimmten Durchmessers.

Es ist bekannt, Folien auch durch einen Wert $F_5$ zu kennzeichnen. Dieser Wert bezeichnet die Zugfestigkeit gemessen bei einer Dehnung von 5% (US-PS 2 995 779, Spalte 4, Z. 66 – 68 und US-PS 3 962 183, Spalte 3, Z. 5 und 6). Dieser Wert ist jedoch nur brauchbar, wenn Dehnungen bis 5% auftreten dürfen und wenn der Anteil irreversibler Dehnung vernachlässigbar ist. Der Wert ist in jedem Fall ungeeignet, einen verbleibenden Anteil an irreversibler Dehnung zu bezeichnen.

Die Polypropylenfolie nach der Erfindung soll den bei der Weiterverarbeitung und im Gebrauch auftretenden Belastungen widerstehen, hierbei jedoch zulässige kleine Dehnungen nicht überschreiten und bezüglich ihrer Dicke nicht überdimensioniert sein. Die Folie wird nach an sich bekannten Verfahren auf eine Kühlwalze extrudiert oder gegossen und anschließend als flache Folie biaxial ausgereckt und orientiert, wobei wenigstens teilweise die Reckung simultan biaxial erfolgt, und hierauf gegebenenfalls, während sie in gerecktem Zustand gehalten wird, thermofixiert, wobei das Herstellungsverfahren so geführt wird, daß die Folie die nachstehend näher erläuterten Festigkeitseigenschaften besitzt.

Die Folie wird durch einen Dehnungsfaktor D charakterisiert, der die Dehnung einer Folie in % mal der Dicke der Folie in mm bei einer bestimmten Zugbelastung in Längsrichtung und bei einer bestimmten Folienbreite angibt.

Dazu wird eine in Verarbeitungsmaschinen übliche mittlere Zugbelastung von 200 N für eine Folie von 1500 mm Breite herangezogen. Der Dehnungsfaktor D kann z. B. mittels eines Teststreifens von 15 mm Breite und einer Zugbelastung von 2 N bei einer Länge von 200 mm in einer geeigneten

0 021 466

Zugprüfmaschine bei einer Dehngeschwindigkeit von 5 mm/min ermittelt und als das Produkt von Dehnung in % und Foliendicke in mm berechnet werden. Der Dehnungsfaktor D ist temperaturabhängig und muß daher für jede Temperatur bestimmt werden. Im Gegensatz zu einem Wert $F_5$ kann durch den Dehnungsfaktor D (mm · %) auch der irreversible Anteil der Dehnung bei dynamischen Wechselbeanspruchungen gekennzeichnet werden.

Die Auswirkung einer derartigen Wechselbeanspruchung kann mit genügender Sicherheit für die praktische Anwendung dadurch ermittelt werden, daß der Teststreifen von 15 mm Breite unter den vorher genannten Bedingungen in 50 Zyklen für die Beanspruchung bei 23°C zwischen 2 N und 8 N belastet und anschließend bei Entlastung die verbleibende irreversible Dehnung gemessen wird. Aus dieser bleibenden Dehnung wird unter Einbeziehung der Foliendicke der Dehnungsfaktor berechnet. Der diese bleibende Dehnung charakterisierende Dehnungsfaktor soll im folgenden als $D_W$ bezeichnet werden. Die gewählte Zugbelastung für 23°C entspricht einer Zugbelastung in einer Maschine von 200 N bzw. 800 N für eine 1500 mm breite Folienbahn.

Die erfindungsgemäße Folie für dynamische Belastungen soll bei Raumtemperatur von 23°C Dehnungsfaktoren für wechselnde Zugbelastungen in Längsrichtung von $D_W = 0,003$ mm · % oder weniger, vorzugsweise von nicht mehr als $D_W = 0,0025$ mm · % besitzen.

Es ergibt sich beispielsweise, daß bei einer Folie von 0,02 mm Dicke nach mehrfachen dynamischen Beanspruchungen von 50 Lastwechseln zwischen 200 und 800 N bei 1500 mm breiten Folien mit einer Dehnung von

$$\frac{0,0025 \text{ mm} \cdot \%}{0,02 \text{ mm}} = 0,125\%$$

zu rechnen ist, wenn ihre Festigkeit in Längsrichtung $D_W = 0,0025$ mm · % entspricht. Oder man kann umgekehrt berechnen, daß eine Folie mit $D_W = 0,003$ mm · %, die durch dynamische Belastungen gedehnt wird, deren verbleibende Dehnung aber 0,1% nicht überschreiten soll, eine Dicke von

$$\frac{0,003 \text{ mm} \cdot \%}{0,1\%} = 0,03 \text{ mm}$$

haben muß.

Für die Verarbeitung der Folien kann jedoch zusätzlich auch die vorübergehende gesamte Dehnung von Bedeutung sein, d. h. einschließlich des reversiblen Anteils. Aus diesem Grunde ist es zweckmäßig, die Folien zusätzlich durch die mögliche gesamte Dehnung zu bezeichnen, und auch hierfür kann der Dehnungsfaktor D verwendet werden. Da die Dehnung temperaturabhängig ist, sollen nachstehend $D_{23}$ für die einmalige Dehnung bei 23°C und $D_{80}$ für die einmalige Dehnung bei 80°C. gelten, jeweils für eine Zugbeanspruchung von 200 N für eine 1500 mm breite Folienbahn.

Bei den erfindungsgemäßen Folien sind $D_{23}$ bis 0,004 mm · %, vorzugsweise 0,003 mm · % und weniger, und außerdem $D_{80} = 0,05$ mm · % oder weniger, vorzugsweise nicht größer als 0,04 mm · %. Die Werte für $D_{23}$ und $D_{80}$ werden wie vorher beschrieben mittels der Zugprüfmaschine ermittelt, wobei die 15 mm breiten Prüfstreifen bei 23°C bzw. 80°C mit 2 N beaufschlagt werden. Sie geben das für die praxisnahen Belastungen auftretende maximale Dehnverhalten an, welches zwar teilweise bei Entlastung wieder aufgehoben wird, aber während der Verarbeitung doch beachtet werden muß.

Bei einer Folie von 0,02 mm Dicke und 1500 mm Breite und $D_{80} = 0,04$ mm · % ergibt sich beispielsweise bei 80°C unter einer Zugbelastung von 200 N eine Dehnung von 2%. Dieselbe Dehnung von 2% ergibt sich auch bei einem Teststreifen von 80°C mit 15 mm Breite und 0,02 mm Dicke unter einer Zugbelastung von 2 N. Wenn in der Praxis bei der Folienverarbeitung Dehnungen in der Größenordnung von etwa 2% und mehr auftreten, so muß diesen Rechnung getragen werden. Durch die Auswahl einer geeigneten Folie mit niedrigen Dehnungsfaktoren $D_{80}$ und $D_{23}$ ist zu erreichen, daß zulässige Dehnungen nicht überschritten werden bzw. daß die Folie nicht wegen ihres Dehnungsverhaltens bei der dynamischen Beanspruchung während der Verarbeitung überdimensioniert werden muß. Die angegebenen Dehnungsfaktoren gelten für Folien mit einer Dicke von etwa 0,008 mm bis 0,06 mm.

Es kann weiterhin die biaxiale Orientierung der ausgereckten Folie in einfacher Weise anhand der Durchstoßfestigkeit nach DIN 53 373 beurteilt werden. Bei den erfindungsgemäßen Folien soll bei 23°C die Schädigungskraft größer oder gleich 6000 N/mm² und die Schädigungsarbeit größer oder gleich 35 J/mm², beides bezogen auf die Foliendicke, und die Schädigungsdehnung ungefähr gleich 12,5 mm sein.

Die Festigkeitswerte für Folien sind sowohl durch die Rohstoffe als auch durch die Herstellungsverfahren zu beeinflussen. In der nachstehenden Tabelle sind zwei Polypropylenfolien, die aus demselben Rohstoff (und zwar Propathene GW 26, ein Produkt der I.C.I. England) hergestellt wurden, mit einander verglichen. Beispiel 1 ist die erfindungsgemäße Folie, die in einem besonderen Verfahren simultan biaxial gereckt wurde, und Beispiel 2 ist eine Folie die biaxial, jedoch in Stufen, d. h. zunächst quer und danach längs, gereckt wurde. Die Folien beider Beispiele waren ausgereckt, jedoch war das Verhältnis von Längsreckung zu Querreckung bei der in Stufen gereckten Folie kleiner als bei der simultan biaxial gereckten Folie.

3

|  | Beispiel 1 | Beispiel 2 |
|---|---|---|
| Reckgrad längs | 1 : 7,7 | 1 : 6,1 |
| Reckgrad quer | 1 : 7,0 | 1 : 9,0 |
| Reckgrad in der Fläche | 1 : 54 | 1 : 55 |
| Durchstoßfestigkeit (DIN 53 373): | | |
| Schädigungskraft | 6800 N/mm$^2$ | 6400 N/mm$^2$ |
| Schädigungsarbeit | 37 J/mm$^2$ | 38 J/mm$^2$ |
| Schädigungsdehnung | 12,5 mm | 13 mm |
| Dehnungsfaktor für wechselnde Belastung $D_W$ | 0,0025 mm.% | 0,005 mm.% |
| Dehnungsfaktor bei 80° C $D_{80}$ | 0,04 mm.% | 0,07 mm.% |
| Dehnungsfaktor bei 23° C $D_{20}$ | 0,003 mm.% | 0,0055 mm.% |

Hieraus ergibt sich, daß die erfindungsgemäße Folie nach Beispiel 1 bezüglich einer geringeren Dehnung in Längsrichtung bei dynamischen Belastungen und bei einmaligen Dehnungsbeanspruchungen der Folie nach Beispiel 2 überlegen ist.

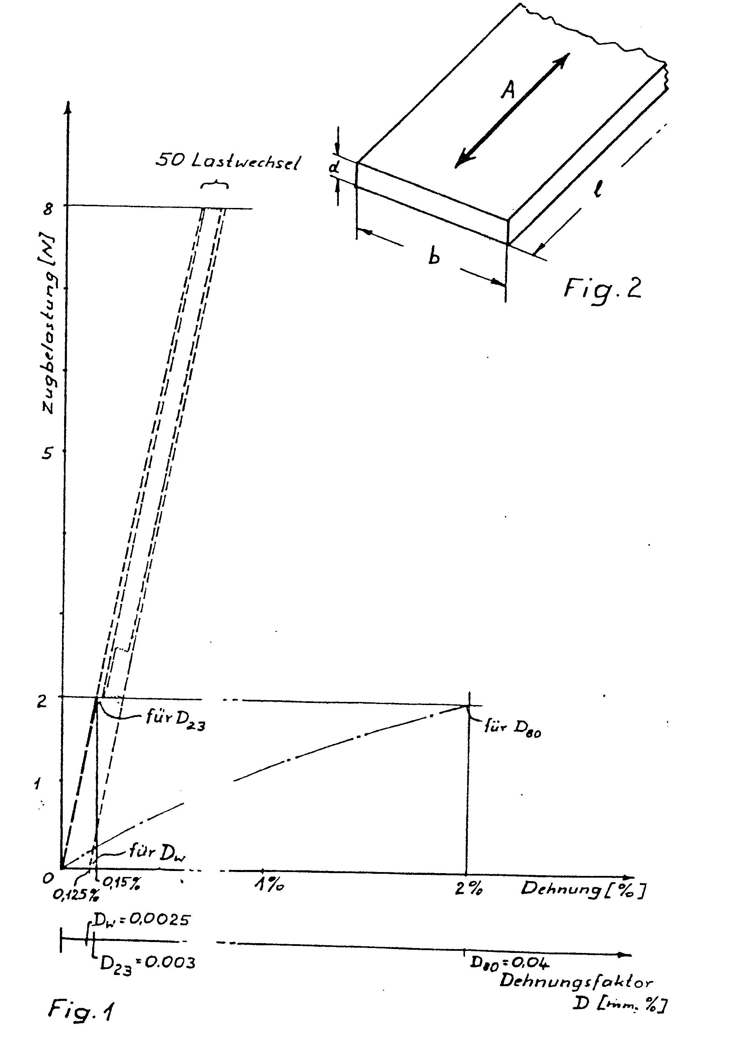

In Fig. 1 sind Dehnungen und Dehnungsfaktoren in einem Diagramm für einen Teststreifen von 0,02 mm Dicke, 15 mm Breite gemäß Beispiel 1 angedeutet.

Fig. 2 zeigt einen Teil einer Folienbahn. Die Folie hat eine Dicke d. Die Bahn oder ein aus einer Bahn geschnittener Streifen haben eine Breite b. Die Länge der Bahn bzw. des Streifens ist mit l angedeutet. Die Längsrichtung der Folie, die auch die Maschinenlaufrichtung bei der Herstellung und Verarbeitung ist, ist durch den Pfeil A angegeben, der in Richtung der Länge l der Bahn bzw. des Streifens verläuft. Die Dehnungsbeanspruchung und die vorübergehend oder bleibend auftretenden Dehnungen liegen in Richtung des Pfeiles A.

Die erfindungsgemäße Polypropylenfolie wird insbesondere als Trägerfolie verwendet und zeichnet sich hierbei durch eine geringe Längsdehnung bei kleiner Foliendicke aus. Bevorzugte Anwendungen, bei denen die Folie mit Vorteil gewählt werden kann, sind Trägerfolien für akustische und optische Informationen, wie Magnetbänder usw., bei denen während des Gebrauchs häufig dynamische Beanspruchungen auftreten, bei denen einerseits Längsdehnungen nicht zugelassen werden können, andererseits aber eine kleine Foliendicke gewünscht wird, um große Längen auf Spulen geringen Durchmessers aufwickeln zu können.

Die Folie kann auch als Träger für mehrfarbige Druckbilder gewählt und insbesondere auch als Verpackungsfolie verwendet werden, wobei hier der Vorteil der geringen Dehnung vor allem während der Herstellung der Folie und der Verpackung günstig ist, z. B. beim Mehrfarbendruck, bei Beschichtungen, beim Umrollen und Aufteilen in schmalere Bahnen und schließlich beim Abziehen in der Verpackungsmaschine.

Die Folie kann vorteilhaft auch für in ähnlicher Weise hergestellte Klebebänder verwendet werden, die außerdem in angebrachtem Zustand praktisch keine Längsdehnung zeigen sollen.

Die Folie kann auch die Trägerfolie für co-extrudierte Schichten sein, welche durch die Reckung der Trägerfolie in ihrer Festigkeit nicht oder nicht wesentlich verbessert werden können, wobei in diesem Falle die vorgenannten Werte für die Dehnungsfaktoren usw. sich nur auf die orientierte und ausgereckte Trägerfolie selbst beziehen.

**Patentansprüche**

1. Dynamisch belastbare Folie aus simultan biaxial orientiertem isotaktischem Polypropylen, die in einem Flächenreckverhältnis von mindestens 1 : 45 ausgereckt ist, gekennzeichnet durch alle der folgenden Eigenschaften:

a) eine Durchstoßfestigkeit (nach DIN 53 373) entsprechend einer Schädigungskraft von 6000 N/mm$^2$ oder mehr, einer Schädigungsarbeit von 35 J/mm$^2$ oder mehr und einer Schädigungsdehnung von etwa 12,5 mm, alle ermittelt bei 23° C;

4

b) einen Dehnungsfaktor $D_W$ von 0,003 mm · % oder weniger, vorzugsweise von nicht mehr als 0,0025 mm · %, gemessen als verbleibende irreversible Dehnung in Längsrichtung nach 50 Lastwechseln zwischen 2 und 8 N bei einem Teststreifen von 15 mm Breite bei 23° C;

c) einen Dehnungsfaktor $D_{23}$ von 0,004 mm · % oder weniger, vorzugsweise von nicht mehr als 0,003 mm · %, gemessen bei einmaliger Dehnung eines Teststreifens von 15 mm Breite durch eine Last von 2 N bei 23° C; und

d) einen Dehnungsfaktor $D_{80}$ von 0,05 mm · % oder weniger, vorzugsweise von nicht mehr als 0,04 mm · %, gemessen bei einmaliger Dehnung eines Teststreifens von 15 mm Breite durch eine Last von 2 N bei 80° C.

2. Verwendung einer dynamisch belastbaren Folie nach Anspruch 1 als Trägerfolie für Informationsträgerbänder.

3. Verwendung einer dynamisch belastbaren Folie nach Anspruch 1 als Trägerfolie für Klebebänder.

4. Verwendung einer dynamisch belastbaren Folie nach Anspruch 1 als Trägerfolie für eine mehrfarbige Bedruckung.

5. Verwendung einer dynamisch belastbaren Folie nach Anspruch 1 als Trägerfolie für Verpackungsmaterial.

6. Verwendung einer dynamisch belastbaren Folie nach Anspruch 1 als Trägerfolie für co-extrudierte Schichten.

## Claims

1. Film, resistant to dynamic stresses, of simultaneously biaxially oriented isotactic polypropylene, which has been stretched in a surface stretch ratio of at least 1 : 45, characterized by all of the following properties:

(a) a puncture resistance (according to DIN 53,373) corresponding to a damaging strength of 6000 N/mm² or more, a damaging energy of 35 J/mm² or more and a damaging elongation of about 12.5 mm, all determined at 23° C;

(b) an elongation factor $D_W$ of 0.003 mm · % or less, preferably of not more than 0.0025 mm · %, measured as residual irreversible elongation in longitudinal direction after 50 stress variations between 2 and 8 N in a test strip of 15 mm width at 23° C;

(c) an elongation factor $D_{23}$ of 0.004 mm · % or less, preferably of not more than 0.003 mm · %, measured at a single elongation of a test strip of 15 mm width by a stress of 2 N at 23° C, and

(d) an elongation factor $D_{80}$ of 0.05 mm · % or less, preferably of not more than 0.04 mm · %, measured at a single elongation of a test strip of 15 mm width by a stress of 2 N at 80° C.

2. Use of a film resistant to dynamic stresses according to claim 1 as carrier film for information carrier tapes.

3. Use of a film resistant to dynamic stresses according to claim 1 as carrier film for adhesive tapes.

4. Use of a film resistant to dynamic stresses according to claim 1 as a carrier film for a multicolour printing.

5. Use of a film resistant to dynamic stresses according to claim 1 as a carrier film for packaging material.

6. Use of a film resistant to dynamic stresses according to claim 1 as a carrier film for co-extruded layers.

## Revendications

1. Feuille dynamiquement sollicitable en polypropylène isotactique orienté biaxialement simultanément qui est étirée jusqu'à un rapport d'étirage de surface d'au moins 1 : 45, caractérisée par l'ensemble des propriétés suivantes:

a) une résistance à la perforation (suivant DIN 53 373) correspondant à une force de dégradation de 6000 N/mm² ou davantage, un travail de dégradation de 35 J/mm² ou davantage et un allongement de dégradation d'environ 12,5 mm, tous déterminés à 23° C;

b) un facteur d'allongement $D_W$ de 0,003 mm · % sinon moins, de préférence de 0,0025 mm · % au maximum, mesuré comme allongement irréversible permanent dans le sens longitudinal après 50 alternances d'effort entre 2 et 8 N sur une éprouvette d'une largeur de 15 mm à 23° C;

c) un facteur d'allongement $D_{23}$ de 0,004 mm · % sinon moins, de préférence de 0,003 mm · % au maximum mesuré par un allongement unique d'une éprouvette d'une largeur de 15 mm par une contrainte de 2 N à 23° C et

d) un facteur d'allongement $D_{80}$ de 0,05 mm · % sinon moins, de préférence de 0,04 mm · % au maximum, mesuré par un allongement unique d'une éprouvette d'une largeur de 15 mm par un effort de 2 N à 80°C.

2. Utilisation d'une feuille dynamiquement sollicitable suivant la revendication 1 comme feuille de support pour une bande de support d'informations.

3. Utilisation d'une feuille dynamiquement sollicitable suivant la revendication 1 comme feuille de support pour une bande adhésive.

4. Utilisation d'une feuille dynamiquement sollicitable suivant la revendication 1 comme feuille de support pour une impression en plusieurs couleurs.

5. Utilisation d'une feuille dynamiquement sollicitable suivant la revendication 1 comme feuille de support pour matière d'emballage.

6. Utilisation d'une feuille dynamiquement sollicitable suivant la revendication 1 comme feuille de support pour des couches coextrudées.

Fig.2

Fig.1